(19)

Europäisches
Patentamt
European
Patent Office
Office européen
des brevets

(11) **EP 3 711 880 A1**

(12) **EUROPEAN PATENT APPLICATION**

(43) Date of publication:
**23.09.2020 Bulletin 2020/39**

(51) Int Cl.:
**B22F 3/00** (2006.01)   **B22F 3/20** (2006.01)
**B22F 3/22** (2006.01)   **C22C 29/08** (2006.01)
**B33Y 70/00** (2020.01)   **B22F 1/00** (2006.01)

(21) Application number: **19163924.4**

(22) Date of filing: **19.03.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Seco Tools AB
737 82 Fagersta (SE)**

(72) Inventors:
• **Baudin, Micael
75221 Uppsala (SE)**
• **Rosencrantz, Bernard
222 21 Lund (SE)**
• **Pettersson, Håkan
737 42 Fagersta (SE)**

(74) Representative: **Sandvik
Sandvik Intellectual Property AB
811 81 Sandviken (SE)**

(54) **FEEDSTOCK AND METHOD FOR MANUFACTURING THE FEEDSTOCK**

(57)     Feedstock for injection molding, extrusion or additive manufacturing of cemented carbide or cermet parts, the feed stock comprising a metal powder and a binder system, the binder system having polyethyleneglycol as main constituent, wherein the binder system further comprises a backbone polymer being a polyacrylate, and a surface active agent.

EP 3 711 880 A1

**Description**

TECHNICAL FIELD

Feedstock for injection molding, extrusion or additive manufacturing of cemented carbide or cermet parts, the feed stock comprising a metal powder and a binder system. Method for manufacturing a feedstock.

BACKGROUND OF THE INVENTION

Cemented carbide or cermet bodies, such as cutting members, conventionally are manufactured by powder pressing and sintering. Cemented carbides are composites comprising small grains in the micro meter range of at least one hard phase in a binder phase. The hard phase in cemented carbide is generally tungsten carbide (WC). In addition, other metal carbides with the general composition (Ti,Nb,Ta,W)C may also be included, as well as metal carbonitrides, for example, Ti(C,N). The binder phase usually comprises cobalt (Co) as a main constituent. Other compositions for the binder phase may also be used, for example, combinations of Co, Ni, and Fe, or Ni and Fe. Cermets are composites of a mixture comprising titanium carbide and nickel.

Industrial production of cemented carbide often includes mixing of given proportion of powders of raw materials and additives in the wet state using a milling liquid. The liquid is often an alcohol, for example, ethanol, or water, or a mixture thereof. The mixture is then milled into a homogeneous slurry. The wet milling operation is made with the purpose of deagglomerating and mixing the raw materials intimately. Individual raw material grains are also disintegrated to some extent. The obtained slurry is then dried and granulated, for example, by means of a spray dryer, and the granulate obtained may be used in uniaxial pressing of green bodies, in extrusion, in injection molding or additive manufacturing.

The handling of the fine metal powders used for the production of cemented carbide and cermets are problematic in two ways. Since fine grained powders have large specific surface areas, they are sensitive to reaction with the oxygen in the air. The metal powder oxidation is an exothermal reaction. Also, the oxidation rate increases with the temperature. This means that the oxidation of fine metal powders is an autoaccelerating process. Due to this, self-igniting and dust explosions of the metal powders is a serious risk. Further, it has been reported that the inhalation of most of these metal powders is a serious health risk. These problems are usually solved with a granulation of these powders with an organic binder. The granulating agent adheres to the surface of the powders and also binds many particles together to a free flowing granulated powder. Since the binder adheres to the metal surfaces, it slows down the oxidation rate of the metal surfaces, and decreases the risk of self-ignition and dust explosions. Since the granulating agent binds many particles together, it reduces the risk of air borne dust to be inhaled.

In the production of cemented carbide and when the slurry processing is performed in a water-ethanol mixture, metal powders granulated with polyethyleneglycol (PEG) are usually used.

Hard metal bodies used for cutting members are conventionally manufactured by pressing and sintering. The desired form of the sintered body has to be obtained as far as possible before sintering because machining of a sintered body is expensive. Some machining of the body in the as-pressed and/or pre-sintered condition may therefore be done. Thereafter the body is finally sintered. During sintering the body normally shrinks about 17 % linearly. After the final sintering, the body is machined to the final shape, if necessary.

For the manufacturing of parts with complex geometry, injection molding, extrusion or additive manufacturing is preferably used. Injection molding is often referred to as Powder Injection Molding (PIM) when used in powder technology. Powder Injection Molding requires a mold having the specific shape of the part to be manufactured. In powder injection molding of tungsten carbide based hard metal parts, the following four consecutive steps are applied:

1. Mixing of granulated cemented carbide powder with a binder system. The binder system acts as a carrier for the powder and constituents 25-60 volume % of the resulting material, often referred to as the feedstock. The exact concentration is dependent on the desired process properties during molding. The mixing is made by adding all the constituents into a mixer heated to a temperature above the melting temperature of the organic binders. The resulting feedstock is obtained as pellets of approximate size 4x4 mm.

2. Performing injection molding using the mixed feedstock. The material is heated to 100-240°C, forced into a cavity with the desired shape, cooled and then removed from the cavity.

3. Removing some parts of the binder from the obtained part. The removal can be obtained by extraction in a suitable solvent and/or by heating in a furnace with a suitable atmosphere. This step is often referred to as the debinding step

4. Sintering of the parts. Common sintering procedures for cemented carbides are applied. During sintering of a powder injection molded part the remaining binder is removed. The parts normally shrinks about 20% linearly during the sintering operation.

The solids loading, $\phi$, of the feedstock is the volumetric amount of hard constituents, compared to the organic

constituents. $\phi$ can be calculated using the following equation:

$$\phi = \frac{\rho_f - \rho_v}{\rho_s - \rho_v}$$

where $\rho_s$ is the density of the cemented carbide as sintered, $\rho_v$ is the mean density of the organic constituents and $\rho_f$ is the density of the feedstock, measured with the helium pycnometer.

The viscosity of the feedstock is affected by the viscosity of the organic binder. The viscosity of the organic bindery is closely related to the green strength of the material. A low green strength can cause the parts to crack during debinding, where the expansion of some organic constituents during melting causes stresses in the part. Another drawback with a low green strength is that the parts may be damaged during the handling of the parts. A high green strength of the material means a high viscosity of the organic binder.

In the case of having a feedstock with high viscosity, problems with mold filling, extended mold wear, weld lines, which may open during sintering, forming cracks and surface defects as well as mold release problems may occur.

OBJECT OF THE INVENTION

It is an object of the present invention to provide a homogenous feedstock having suitable rheological properties for powder injection molding, extrusion, or additive manufacturing and where one of the components in the feedstock is metal powders granulated with polyethyleneglycol.

SUMMARY OF THE INVENTION

According to a first aspect the present invention provides a feedstock for injection molding, extrusion or additive manufacturing of cemented carbide or cermet parts, the feed stock comprising a metal powder and a binder system, the binder system having polyethyleneglycol as main constituent, wherein the binder system further comprises

- a backbone polymer being any of a polyacrylate, and
- a surface active agent.

By this combination of components a feedstock having the right rheological properties and a high degree of chemical and physical stability for powder injection molding, extrusion or additive manufacturing is achieved. Polyethyleneglycol gives the compound a suitable viscosity and is easily extracted during solvent or low-temperature thermal debinding of the produced cemented carbide or cermet parts. Polyethyleneglycol also provides a decrease in the dusting of cobalt in cemented carbide

According to one embodiment the binder system comprises an antioxidant.

According to one embodiment the binder system comprises a crystallization inhibitor.

According to one embodiment the binder system comprises a wax, preferably a paraffin wax.

According to one embodiment the polyacrylate is polymethyl methacrylate. Polymethyl methacrylate as backbone polymer contributes to holding the green body together after injection molding and during removal of the organic compound in the feedstock.

According to one embodiment said antioxidant is at least one of the following: polyvinylpyrrolidone and hydroxypropyl methylcellulose. The addition of the antioxidant prevents polyethylene glycol from oxidation and degradation at elevated temperature.

According to one embodiment said surface active agent is at least one of the following: stearic acid and oleic acid. This improves the wettability of the metal powder and additives, and reduces the viscosity of the feedstock.

According to one embodiment said crystallization inhibitor is tert-butylhydroquinone. The addition of tert-butylhydroquinone inhibits the crystallisation of polyethylene glycol.

According to one embodiment the content of tert-butylhydroquinone is 1-10 vol%, preferably 1-5 vol%.

According to one embodiment the content of the polyethylenglycol is 50-85 vol%, preferably 55-80 vol%, most preferably 60-75 vol% of the total content of the binder system.

According to one embodiment the content of polyacrylate is 2-30 vol%, preferably 2-20 vol%, most preferably 2-15 vol% of the total content of the binder system.

According to one embodiment the content of said antioxidant is 5-15 vol%, preferably 8-12 vol% of the total content of the binder system.

According to one embodiment the content of said surface active agent is 1-20 vol%, preferably 2-10 vol% of the total content of the binder system.

According to one embodiment the content of said wax is 1-10 vol%, preferably 1-5 vol% of the total content of the binder system.

According to one embodiment the solid loadings of metal powder and carbides is 48-60 vol%, preferably 50-58 vol% of the total content of the feedstock.

According to a second aspect, the invention provides a method for manufacturing a feedstock for injection molding, extrusion or additive manufacturing of cemented carbide or cermet parts,
the method comprises the following steps:

- wet milling of metal powder and carbides in a slurry comprising polyethylene glycol and at least one of the following: water and alcohol,
- drying of the slurry formed during the wet milling process step,
- mixing the dried powder with a binder system comprising a backbone polymer in the form of polyacrylate and a surface active agent, to form the feedstock.

According to one embodiment additional polyethyleneglycol is added during the mixing step.

According to one embodiment an antioxidant and/or a crystallization inhibitor is added during the mixing step.

According to a third aspect, the invention provides use of a feedstock according to any of the above embodiments for powder injection molding, extrusion or additive manufacturing.

By this a powder injection molding, extrusion or additive manufacturing resulting in components having excellent properties without, for example, voids due to that the feedstock has the suitable rheological properties

DETAILED DESCRIPTION OF PREFERRED EMBODIMENTS

According to one embodiment of the invention there is provided a feedstock for injection molding, extrusion or additive manufacturing, the feedstock comprising a metal powder and a binder system, the binder system having polyethyleneglycol as main constituent, wherein the binder system further comprises a backbone polymer being a polyacrylate, an antioxidant, a wax a surface active agent and a crystallization inhibitor.

The invention can be used for all compositions of cemented carbide and all WC grain sizes commonly used as well as for titanium carbonitride based materials.

The feedstock is obtained according to the following:

1) Wet milling of 87.26 wt% wolfram carbide, 10 wt% cobalt, 0.46 wt% chromium carbide ($Cr_3C_2$), 0.04 wt% carbon black and 2.24 wt% polyethylene glycole in water or alcohol or a combination thereof.

2) Drying of the slurry formed during the above mentioned wet milling process step such that agglomerated powder is achieved

3) Mixing the dried powder by kneading with a binder system, consisting of a backbone polymer being a polyacrylate , an antioxidant, a surface active agent, a wax and a crystallization inhibitor. The mixing is performed in a batch mixer or twin screw extruder, heated to 130-220 °C.

4) Injection moulding of the feedstock in a conventional injection moulding machine. The material is heated to 100-240 °C, preferably 130-180 °C, and then forced into a cavity with the desired shape. The obtained part is cooled and then removed from the cavity.

5) Debinding the obtained part. Debinding may be done in one or several steps, such as solvent extraction or thermal debinding.

6) Presintering of the part in vacuum at 900-1250 °C, preferably at about 1200 °C.

7) Sintering of the parts to full density using conventional sintering technique.

The invention can be used for all compositions of cemented carbide and all WC grain sizes commonly used as well as for titanium carbonitride based materials.

Powder composition

A WC-10 wt-% Co cemented carbide powder was made by wet milling PEG-granulated Co-powder, Cr3C2-powder, WC, polyteylene glycole (PEG) in milling liquid consisting of ethanol and water. The made powder slurry was dried to obtain a powder. The powder has a composition being 87.26 wt% wolfram carbide, 10 wt% cobalt, 0.46 wt% chromium carbide ($Cr_3C_2$), 0.04 wt% carbon black and 2.24 wt% polyethylene glycole.

Example 1

The powder described above was mixed by kneading 2870 g powder with 10.61 g polymethyl methacrylate and 1.62 g Paraffin wax (Sasol Wax) and 10.16 g hydroxypropyl methylcellulose and 8.77 g polyvinylpyrrolidone and 1.89 g tert-butylhydroquinone and 1.69 g stearic acid and 1.61g oleic acid and 91.66 g polyethyleneglycol in a Z-blade kneader mixer (Werner & Pfleiderer LUK 1,0). This resulted in a feedstock with a density of 8.01 g/ml, corresponding to a $\phi$ of 0.524, and a measured viscosity of 153.2 Pa*s at 5000 s$^{-1}$ (Malvern Panalytical, Rosand RH10).

Example 2

The powder described above was mixed by kneading 2870 g powder with 10.61 g polymethyl methacrylate and 1.62 g Paraffin wax (Sasol Wax) and 12.95 g hydroxypropyl methylcellulose and 11.18 g polyvinylpyrrolidone and 9.45 g tert-butylhydroquinone and 1.69 g stearic acid and 8.05 g oleic acid and 71.56 g polyethyleneglycol in a Z-blade kneader mixer (Werner & Pfleiderer LUK 1,0). This resulted in a feedstock with a density of 8.01 g/ml, corresponding to a $\phi$ of 0.524, and a measured viscosity of 24.7 Pa*s at 5000 s$^{-1}$ (Malvern Panalytical, Rosand RH10).

Example 3

The powder described above was mixed by kneading 2915 g powder with 8.45 g polymethyl methacrylate and 6.44 g Paraffin wax (Sasol Wax) and 8.08 g hydroxypropyl methylcellulose and 8.90 g polyvinylpyrrolidone and 1.50 g tert-butylhydroquinone and 1.35 g stearic acid and 6.41 g oleic acid and 43.11 g polyethyleneglycol in a Z-blade kneader mixer (Werner & Pfleiderer LUK 1,0). This resulted in a feedstock with a density of 8.80 g/ml, corresponding to a $\phi$ of 0.582, and a measured viscosity of 134.6 Pa*s at 5000 s$^{-1}$ (Malvern Panalytical, Rosand RH10).

Example 4

The powder described above was mixed by kneading 2870 g powder with 42.43 g polymethyl methacrylate and 1.62 g Paraffin wax (Sasol Wax) and 10.15 g hydroxypropyl methylcellulose and 11.17 g polyvinylpyrrolidone and 1.89 g tert-butylhydroquinone and 8.46 g stearic acid and 8.05 g oleic acid and 44.24 g polyethyleneglycol in a Z-blade kneader mixer (Werner & Pfleiderer LUK 1,0). This resulted in a feedstock with a density of 8.01 g/ml, corresponding to a $\phi$ of 0.524, and a measured viscosity of 78.5 Pa*s at 5000 s$^{-1}$ (Malvern Panalytical, Rosand RH10).

Example 5

The powder described above was mixed by kneading 2895 g powder with 23.70 g polymethyl methacrylate and 4.33 g Paraffin wax (Sasol Wax) and 10.32 g hydroxypropyl methylcellulose and 8.91 g polyvinylpyrrolidone and 5.06 g tert-butylhydroquinone and 4.54 g stearic acid and 4.31 g oleic acid and 44.53 g polyethyleneglycol in a Z-blade kneader mixer (Werner & Pfleiderer LUK 1,0). This resulted in a feedstock with a density of 8.40 g/ml, corresponding to a $\phi$ of 0.552, and a measured viscosity of 204.7 Pa*s at 5000 s$^{-1}$ (Malvern Panalytical, Rosand RH10).

The viscosity measurements in Examples 1 to 5 were carried out using a Malvern Panalytical Rosand RH10 capillary rheometer at 160°C, using two dies, one with diameter 1.0 mm and length 16.0 mm, and one with diameter 1.0mm and length 0.25mm, and two pressure transducers, one 30 000 Psi transducer and one 1 500 psi transducer. Bagley and Rabinowitsch corrections were done on the viscosities by Flowmaster software.

Table 1

| Example | Powder filling [vol%] | OA [vol% of binder] | PW [vol% of binder] | Backbone [vol% of binder] | HPMC [vol% of binder] | SA [vol% of binder] | Polyethylene glycol [vol% of binder] | PVP [vol% of binder] | TBHQ [vol% of binder] | Viscosity in RH10 at 5000s-1 [Pa*s] |
|---|---|---|---|---|---|---|---|---|---|---|
| 1 | 52,00% | 1,00% | 1,00% | 5,00% | 4,06% | 1,00% | 82,88% | 4,06% | 1,00% | 153,2 |
| 2 | 52,00% | 5,00% | 1,00% | 5,00% | 5,18% | 1,00% | 72,64% | 5,18% | 5,00% | 24,71 |
| 3 | 58,00% | 5,00% | 5,00% | 5,00% | 4,06% | 1,00% | 73,76% | 5,18% | 1,00% | 134,6 |
| 4 | 52,00% | 5,00% | 1,00% | 20,00% | 4,06% | 5,00% | 58,76% | 5,18% | 1,00% | 78,48 |
| 5 | 55,00% | 3,00% | 3,00% | 12,50% | 4,62% | 3,00% | 66,26% | 4,62% | 3,00% | 204,74 |

Table 1 shows the compositions according to Examples 1 to 5, and the measured viscosity for the respective example. The viscosity of Example 1 to 5 seen in Table 1 have been measured using the above described methodology. The viscosities in Table 1 are good. Example 2 has the most suitable measured viscosity for injection molding.

**Claims**

1. Feedstock for injection molding, extrusion or additive manufacturing of cemented carbide or cermet parts, the feedstock comprising a metal powder and a binder system, the binder system having polyethyleneglycol as main constituent, **characterized in that** the binder system further comprises

   - a backbone polymer being a polyacrylate, and
   - a surface active agent.

2. A feedstock according to claim 1, wherein the binder system comprises an antioxidant.

3. A feedstock according to any of the preceding claims, wherein the binder system comprises a crystallization inhibitor.

4. A feedstock according to any of the preceding claims, wherein said polyacrylate is polymethyl methacrylate.

5. A feedstock according to any of claims 2-4, wherein said antioxidant is at least one of the following: polyvinylpyrrolidone and hydroxypropyl methylcellulose.

6. A feedstock according to any of the preceding claims, wherein said surface active agent is at least one of the following: stearic acid and oleic acid.

7. A feedstock according to any of claims 3-6, wherein said crystallization inhibitor is tert-butylhydroquinone.

8. A feedstock according to any of the preceding claims, wherein the content of the polyethylenglycol is 50-85 vol%, preferably 55-80 vol%, most preferably 60-75 vol% of the total content of the binder system.

9. A feedstock according to any of the preceding claims, wherein the content of polyacrylate is 2-30 vol%, preferably 2-20 vol%, most preferably 2-15 vol% of the total content of the binder system.

10. A feedstock according to any of claims 2-9, wherein the content of said antioxidant is 5-15 vol%, preferably 8-12 vol% of the total content of the binder system.

11. A feedstock according to any of the preceding claims, wherein the content of said surface active agent is 1-20 vol%, preferably 2-10 vol% of the total content of the binder system.

12. A feedstock according to any of claims 1-11, wherein the solid loadings of metal powder and carbides is 48-60 vol%, preferably 50-58 vol% of the total content of the feedstock.

13. Method for manufacturing a feedstock for injection molding, extrusion or additive manufacturing of cemented carbide or cermet parts, comprising the following steps:

    - wet milling of metal powder and carbides in a slurry comprising polyethylene glycol and at least one of the following: water and alcohol,
    - drying of the slurry formed during the wet milling process step,
    - mixing the dried powder with a binder system comprising a backbone polymer in the form of polyacrylate and a surface active agent, to form the feedstock.

14. Method according to claim 13, wherein additional polyethylene glycol is added during the mixing step.

15. Method according to any of claims 13-14, wherein an antioxidant and/or a crystallization inhibitor is added during the mixing step.

16. Use of a feedstock according to any of claims 1-11, or a feedstock manufactured according to any of claims 13-15, for powder injection molding, extrusion or additive manufacturing.

Europäisches
Patentamt

European
Patent Office

Office européen
des brevets

**EUROPEAN SEARCH REPORT**

Application Number

EP 19 16 3924

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | N. CHUANKRERKKUL ET AL: "Flow and void formation in powder injection moulding feedstocks made with PEG/PMMA binders Part 1 - Experimental observations", POWDER METALLURGY., vol. 51, no. 1, 19 March 2008 (2008-03-19), pages 66-71, XP055606492, GB ISSN: 0032-5899, DOI: 10.1179/174329008X271600 | 1,3,4, 6-9,11, 12,16 | INV. B22F3/00 B22F3/20 B22F3/22 C22C29/08 B33Y70/00  ADD. B22F1/00 |
| Y | * abstract * * Experimental methods * * table 2 * | 13-15 | |
| X | CN 106 312 074 A (SUZHOU SAITERUI PREC MACHINERY PARTS CO LTD) 11 January 2017 (2017-01-11) | 1-12,16 | |
| Y | * abstract * * claims 1, 2 * | 13,15 | |
| Y | US 2003/124017 A1 (KRUSE OLOF [SE]) 3 July 2003 (2003-07-03) * abstract * * paragraphs [0004], [0014] * * claims 1, 6 * | 13-15 | TECHNICAL FIELDS SEARCHED (IPC)  B22F C22C B33Y |

The present search report has been drawn up for all claims

| Place of search | Date of completion of the search | Examiner |
|---|---|---|
| The Hague | 9 September 2019 | Gomes Pinto F., R |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

    ...........................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 19 16 3924

This annex lists the patent family members relating to the patent documents cited in  the above-mentioned European search report.
The members are as contained in the European Patent Office EDP file on
The European Patent Office is in no way liable for these particulars which are merely given for the purpose of information.

09-09-2019

| Patent document cited in search report | Publication date | Patent family member(s) | Publication date |
|---|---|---|---|
| CN 106312074 A | 11-01-2017 | NONE | |
| US 2003124017 A1 | 03-07-2003 | JP 2003221631 A<br>US 2003124017 A1 | 08-08-2003<br>03-07-2003 |

EPO FORM P0459

For more details about this annex : see Official Journal of the European Patent Office, No. 12/82